# EUROPEAN PATENT APPLICATION

(11) **EP 2 299 651 A1**
(43) Date of publication of application: **23.03.2011**
(21) Application number: 09170588.9
(22) Date of filing: 17.09.2009
(51) Int. Cl.: H04L 29/06

(54) **Method and device for processing data in an IP-based network**

(71) Applicant: Nokia Siemens Networks Oy, 02610 Espoo (FI)
(72) Inventor: Jank, Uwe, 14612, Falkensee (DE)

(57) **Abstract**

A method and a device for processing data in an IP-based network are provided, wherein based on a request from a terminal an emulated wire is set up between two IP network access devices. Furthermore, a communication system is suggested comprising said device.

## Description

The invention relates to a method and to a device for processing data in an IP-based network. Furthermore, a communication system comprising at least one such device is suggested.

Network operators offer different kinds of access to the Internet, e.g., via DSL or mobile cell phones. Such access is used by customers also for applications (e.g., online-banking, e-government applications) transferring sensitive data through the Internet and/or through Intranets.

An IP-based network connects devices and applications such that a device connected to the IP network may reach any other device. Therefore, transferring confidential data via the Internet could be subject to malicious attacks conducted by applications or devices that are connected to the IP network, e.g., manipulating, eavesdropping and/or storing of confidential data.

In order to counteract such attacks, the data may be encrypted during transport, firewalls or filters may be used to provide protection from malicious IP traffic and certificates can be used for devices to authenticate themselves towards applications.

However, all such countermeasures use software, which may have security loopholes bearing the risk of additional attacks of malicious applications or devices. Hence, the IP network being utilized for confidential or otherwise sensitive data bears a considerable risk of successful malicious attacks manipulating or retrieving such data.

The **problem** to be solved is to overcome the disadvantages stated above and in particular to provide an approach that allows a high degree of confidentiality regarding conveying sensitive data in an IP network.

This problem is solved according to the features of the independent claims. Further embodiments result from the depending claims.

In order to overcome this problem, a method is suggested for processing data in an IP-based network, wherein based on a request from a terminal an emulated wire is set up between two IP network access devices.

The emulated wire is also referred to as "wired" connection and may in particular be a (transient) emulated circuit-switched connection between the two IP network access devices. The emulated wire allows for a high level of protection and security enabling an exchange of confidential data with limited exposure to attacks, e.g., unauthorized eavesdropping.

The IP-based network may be, e.g., the Internet, an Intranet or a portion thereof.

It is noted that the terminal may be attached to one of the two IP network access devices and the emulated wire is set up towards a destination, e.g., another terminal that may be attached to the other IP network access device. After such set up of the emulated wire, confidential data can be conveyed via said emulated wire with an increased level of protection against attacks.

The decision or trigger to set up the emulated wire is provided by the terminal, which may send the according request to the IP network access device to which it is attached or to which it is about to be attached.

The approach presented in particular applies to accesses to IP-based networks and transport of sensitive data.

In an embodiment, the IP-based network comprises at least two IP-based network domains, wherein the emulated wire is set up across the at least two IP-based network domains by setting up emulated wire segments between edges of the IP-based network domains.

The emulated wire segments can be combined to an end-to-end emulated wire, which then provides the service of a protected "wired" connection across said several IP-based network domains.

This approach is advantageous in case an IP-based network comprises several domains that are operated by different providers and/or use different IP technologies. In such case, the step-by-step segmented "wired" connections across the IP-based network domains allows for a combined end-to end "wired" connection.

It is noted that even in case of several domains, a single segment may be utilized across such domains. This may in particular be applicable in case one technology is available end-to-end throughout the network.

In another embodiment, the terminal is a terminal attached to the IP network access device via a fixed connection and/or via a wireless connection.

The terminal may be any fixed or wireless device comprising a corresponding interface to the fixed or wireless network. The terminal may in particular be a computer, a mobile or cellular phone or device.

In a further embodiment, the emulated wire (to be) set up is triggered by an application running on the terminal and/or by user request.

Hence, an application may automatically request a secure connection and thus set up, use and/or release the emulated wire. The terminal or the application may in addition use a conventional access to the IP-based network (without such added protection via said emulated wire). Also, the emulated wire may (manually) be triggered to be set up via the terminal. Hence, a user may choose to select such emulated wire for a protected connection, e.g., to conduct data exchange with a destination device, for example, another terminal, with an increased level of protection against potential attacks.

In a next embodiment, the emulated wire is used for conveying data between the terminal and a destination terminal, wherein the terminal and the destination terminal are each attached to one of the IP network access devices.

Hence, the terminal-to-terminal connection via the emulated wire allows for a high degree of protection. This protection is achieved by a virtual direct connection between the IP network access devices.

It is also an embodiment that the emulated wire is set up across the IP-based network.

As soon as the emulated wire is set up across the IP-based network it may be used for conveying traffic in particular between terminals with an increased degree of protection against malicious attacks.

Pursuant to another embodiment, a path along the emulated wire is checked.

Hence, a suspicious path segment could be found by such an inspection. This inspection can in particular be conducted prior to the actual data being exchanged via said emulated wire. Accordingly, the inspection may be conducted prior to setting up the emulated wire or after the emulated wire has been set up.

The inspection could be conducted utilizing existing OAM protocols; hence, segments of the path could be checked.

According to an embodiment, the terminal is attached to the IP network access device.

It is an option that a terminal remains connected and/or offers at least one "wired" connection end point. Hence, the terminal may remain attached to the IP network access device and provide a connection end point that could be easily and fast connected to an emulated wire and thus to another terminal.

This is useful, e.g., in case a terminal provides services to other terminals over such protected "wired" connection. For example, a banking application server may be installed in a way to permanently offer a bundle of "wired" connection end points to be utilized by potential banking application clients running on personal computers or mobile devices requiring transitional connections to said banking application server.

According to another embodiment, the emulated wire comprises an edge-to-edge pseudo wire.

In yet another embodiment, the emulated wire utilizes a secured IP-based transport technique, in particular an Internet protocol security.

Hence, encrypted tunneling can be used via said IPsec approach.

According to a next embodiment, the emulated wire utilizes a non-IP transport solution, in particular based on pseudo-wire services.

Thus, MPLS-based pseudo-wire services, e.g., multi-segmented PWE3, can be used as a transport solution across the IP-based network.

The problem stated above is also solved by a device comprising or being associated with a processing unit that is arranged such that the method as described herein is executable thereon.

Said processing unit may comprise at least one of the following: a processor, a microcontroller, a hard-wired circuit, an ASIC, an FPGA, a logic device.

According to an embodiment, the device is a communication device, in particular a or being associated with a terminal.

Said terminal may be a device arranged to be connected to a fixed and/or wireless network. Hence, the terminal may comprise at least one corresponding interface.

According to another embodiment, the device is a communication device, in particular a or being associated with an IP network access device.

Said IP network access device may be any IP-DSLAM, BRAS, GGSN or a corresponding network element or node of an LTE architecture.

The problem stated supra is further solved by a communication system comprising at least one device as described herein.

Embodiments of the invention are shown and illustrated in the following figures:
- Fig.1: shows a schematic diagram visualizing a basic ap- proach as how to use an emulated wire through an IP- based network, wherein the IP-based network directly connects access lines of devices requesting a service for a "wired" (i.e. a transient circuit-switched con- nection emulation) connection;
- Fig.2: shows a flow chart comprising a sequence of steps for setting up the access line of a device, which re- quests a circuit-switched connection through an IP- based network;
- Fig.3: shows a schematic diagram visualizing an extended "wired" connection based on the connection shown in Fig.1, wherein this extended "wired" connection copes with different autonomous domains of the IP-based network.

The approach provided herein utilizes the concept of conveying data (any kind of traffic, e.g., user data, program information, voice, speech, signaling or administration information) "through a wire", wherein such wire may be a virtual wire. The advantage of this solution is that only authorized devices can access the information conveyed via said wire.

An IP network infrastructure provides technologies and protocols that are capable of emulating wires between edges of the IP network.

In addition, non-IP technology could be utilized and in particular be provided with the IP network devices for the purpose of emulating said wires. Such approach may protect the wires and the data transported from any attack, e.g., eavesdropping or manipulation that may otherwise be possible due to the IP technology used.

Hence, network elements, in particular IP network access devices, are suggested, which may allow accessing IP-based devices in the following ways:
(i) Conventional access to the IP-based network as it is implemented today, e.g., via DSL, GPRS, UMTS or the like;
(ii) Based on a dedicated request, in particular a request from a terminal (e.g., a mobile terminal), a (transient) emulated circuit-switched (also referred to as "wired") connection can be set up to another device or application that is connected to the same IP network (e.g., the Internet).

Such accesses of the network element could be conducted substantially at the same time or the access may be restricted to one possibility (i) or (ii) only.

Hence, the emulated circuit-switched ("wired") connection can be dynamically set up (in particular at and/or for a (predetermined) period of time) through the IP-based network upon request from a device.

Such device may be any fixed or wireless device, in particular any device with an appropriate interface, e.g., a radio interface. The device may be a mobile or cellular phone, a personal digital assistant, a computer, an application device with a corresponding radio interface or the like. The device may also be a fixed device, a terminal connected by wire to the IP network. Such connection may comprise a cable or an optical fiber. The connection may be a DSL.

A non-IP-based technology may be deployed and/or utilized throughout the IP network infrastructure for increasing the security level of the "wired" connection. Hence, existing approaches that are not commonly applied in the IP network can be utilized for this purpose to increase the security of the "wired" connection.

The level of security of the "wired" connection can be further increased by tracing the path of the "wired" connection through the IP network and detecting any suspicious segments along such path. This can be done prior to the "wired" connection being used for conveying (user) data. Suspicious segments may be segments that could be used for redirecting data to malicious devices. Such segments could be determined by OAM protocols checking the path for, e.g., non-plausible delays, non-plausible detours, etc.

A request for a "wired" connection can be indicated or signaled by using an access protocol between the device to be connected (e.g., a personal computer or a mobile phone) and the IP network access device.

For that purpose, existing access protocols could be amended to support such a signaling mechanism.

Based on such request, the IP network access device may set up a "wired" connection (i.e. a transient circuit-switched connection emulation) through the IP network. As an option, the IP network access device may check the path along the "wired" connection for suspicious segments. In case the set up of the "wired" connection and the optional check for suspicious segments indicate success, the "wired" connection between at least two IP network access devices, in particular deployed on the edge of the IP-based network, can be emulated.

Advantageously, the device to be connected can be a terminal of any kind and may manually be triggered to set up a confidential connection, i.e. said "wired" connection. It is also an option that such confidential connection is automatically set up triggered by an application running on the terminal. For example, a banking application may require a certain degree of confidentiality and may thus - without any user interaction - trigger the "wired" connection to be set up. The data may be exchanged via such transient circuit-switched connection emulation and afterward the "wired" connection can be torn down by the banking application.

It is also an option that a user may require a confidential connection and therefore triggers the request that is sent from his terminal towards the IP network access device in order to set up such "wired" connection to a given destination, e.g., a terminal the user wants to get connected to and/or a terminal that the user wants to retrieve services (data) from.

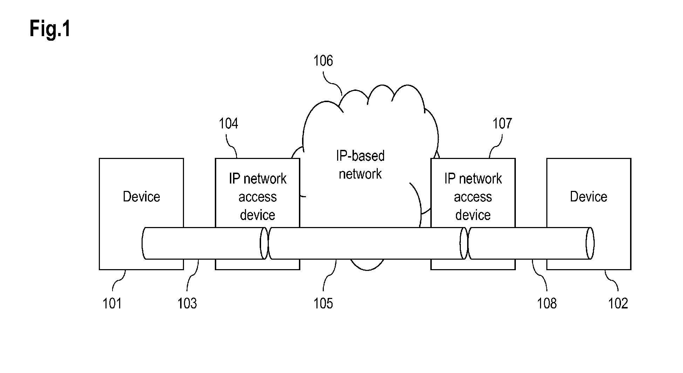

**Fig.1** shows a schematic diagram visualizing a basic approach as how to use an emulated wire through an IP-based network, wherein the IP-based network directly connects access lines of devices requesting a service for a "wired" (i.e. a transient circuit-switched connection emulation) connection.

A device 101 requests data to be conveyed over a "wired" connection to a device 102. The device 102 may be referred to as destination in case the device 101 triggers such request. It is noted, however, that the request to set up or install the "wired" connection may be triggered by a device 101, 102.

Also, the device 101 may request a service to be provided from the device 102, wherein said service is to be provided via a "wired" connection.

As indicated above, the "wired" connection may be an emulated wired connection, in particular a transient emulation of a circuit-switched connection. The trigger for such "wired" connection to be established is thus provided by the device 101. Hence, the decision about setting up, maintaining and/or releasing such "wired" connection is based on at least one message from a terminal, in Fig.1 the device 101. The motivation for such setting up of the "wired" connection is that the device 101 requires a connection to the device 102, said connection providing a certain level of confidentiality and thus has to be protection against any malicious attacks on traffic conveyed between said devices 101, 102.

The device 101 conveys the request via an access line 103 to an IP network access device 104. The IP network access device 104 sets up a transient emulated wire 105 across an IP-based network 106 to an IP network access device 107, which is located at the edge of said IP-based network 106. The device 102 is connected to the IP network access device 107 via an access line 108.

The access line 103, 108 may be a twisted pair cable or an optical fiber or a radio access connection. The radio connection may comprise, e.g., a radio channel and an associated tunnel across the core network and thus utilize the mechanism as described herein. The IP network access device 104, 107 may be a DSLAM, a BRAS, a GGSN or the like.

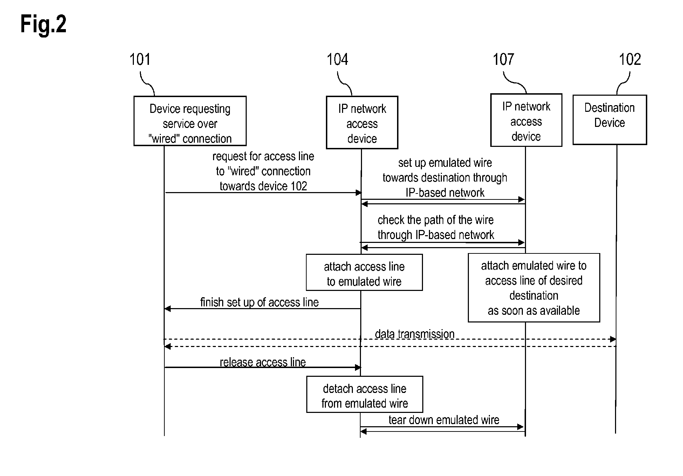

**Fig.2** shows a flow chart comprising a sequence of steps for setting up the access line of a device, which requests a circuit-switched connection through an IP-based network.

Hence, the flow chart of Fig.2 shows the devices 101, 102, 104 and 107 of Fig.1. The device 101 requests a service over the "wired" connection, said service being provided by the device 102, wherein the device 101 is connected to the IP network access device 104 and the device 102 is connected to the IP network access device 107. As also indicated in Fig.1, the IP network access devices 104, 107 are edge nodes of an IP-based network.

The device 101 sends a message to the IP network access device 104 requesting an access line to the "wired" connection towards the device 102. The IP network access device 104 sets up the emulated wire towards the device 102 across the IP-based network with the IP network access device 107. Optionally, the IP network access device 104 may check the path of the "wired" connection through the IP-based network. The IP network access device 107 may provide corresponding response messages to set-up and check messages issued by the IP network access device 104.

The IP network access device 104 may then attach the access line from the device 101 to the emulated wire that has been set up to the IP network access device 107. Accordingly, the IP network access device 107 may attach the emulated wire to the IP network access device 104 to an access line towards the device 102 (in particular as soon as such access line is available).

A data transmission may then be conducted between the device 101 and the device 102 via the emulated wire. Such transmission can be a bidirectional and/or a unidirectional communication between the devices 101, 102. The transmission(s) between the devices 101, 102 are as if the devices were directly connected with one another via a "wire".

After the data transmission is finished, the device 101 may send a message to the IP network access device 104 indicating to release the "wired" connection. The IP network access device 104 detaches the access line from the emulated wire and tears down the emulated wire to the IP network access device 107. The IP network access device 107 may acknowledge this tearing down of the emulated wire and may release the access line towards the device 102 (not shown in Fig.2).

The release/detachment procedure may be initiated by either device 101, 102, wherein the associated IP network access device is then going to detach the access line from the emulated wire and indicate such release to the respective other IP network access device.

It is noted that the device 102 at the other end of the "wired" connection (the device that may actually provide a service over the "wired" connection) may be connected to the emulated wire the same way as described for the device 101. It is an option that a device remains connected or offers a bundle of permanently available "wired" connection end points.

The approach discussed herein may in particular utilize a secured IP-based transport through the IP network, e.g., via encrypted tunnels deploying IPsec technologies. As an option, non-IP-based transport solutions could be utilized across the IP network (or a portion thereof), e.g., by using MPLS-based pseudo-wire services (e.g., multi-segmented PWE3).

Different IP network domains, in particular as being commonly used throughout the public Internet, may offer different technologies for providing a "wired" connection, e.g., a transient circuit-switched connection emulation. In such scenario, network elements at the domain edges may provide a portion or a segment of the "wired" end-to-end connection accordingly. This could be achieved, e.g., according to a setup procedure similar to the phone call setup as known from SS#7 networks.

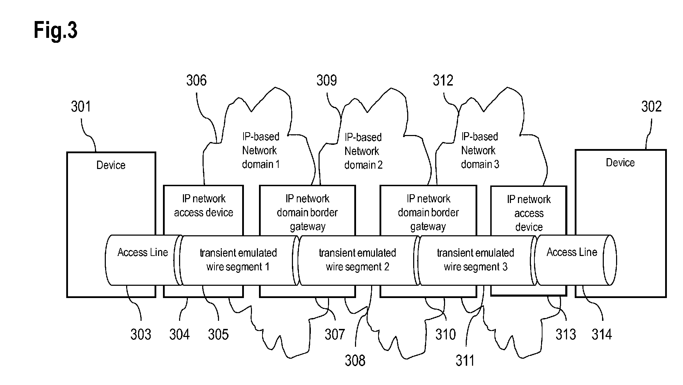

**Fig.3** shows a schematic diagram visualizing such an extended "wired" end-to-end connection based on the connection shown in Fig.1. This extended "wired" connection copes with different autonomous domains of an IP-based network.

A device 301 requests data to be conveyed over a "wired" connection to a device 302. Also, the device 301 may request a service to be provided from the device 302, wherein said service is to be provided via a "wired" connection. As indicated above, the "wired" connection may be an emulated wired connection, in particular a transient emulation of a circuit-switched connection. The trigger for such "wired" connection to be established is thus provided by the device 301.

The device 301 conveys the request via an access line 303 to an IP network access device 304. The IP network access device 304 sets up a transient emulated wire segment 305 across an IP-based network domain 306 to an IP network domain border gateway 307. The IP network domain border gateway 307 sets up a transient emulated wire segment 308 across an IP-based network domain 309 to an IP network domain border gateway 310. The IP network domain border gateway 310 sets up a transient emulated wire segment 311 across an IP-based network domain 312 to an IP network access device 313, which is located at the edge of said IP-based network domain 312. The device 302 is connected to the IP network access device 313 via an access line 314.

Hence, several transient emulated wire segments 305, 308, 311 are set up and maintained between different IP network access devices 304, 313 and IP network domain border gateways 307, 310. The IP-based network domains 306, 309, 312 shown may utilize different technologies or they may be driven by different operators (i.e. being different administrative domains). At the edge of each IP-based network domain the segment of the "wired" connection is terminated and reestablished.

The approach suggested could in particular be deployed with or implemented in IP network access devices, e.g., IP-DSLAM, BRAS, GGSN or related nodes of an LTE network architecture (SAE, EPS).

### List of Abbreviations:

- BRAS: Broadband Remote Access Server
- DSL: Digital Subscriber Line
- EPS: Evolved Packet System
- GGSN: Gateway GPRS Support Node
- GPRS: General Packet Radio Service
- IP: Internet Protocol
- IPDSLAM: IP over DSL Access Multiplexer
- IPsec: Internet Protocol security
- IT: Information Technology
- LTE: Long Term Evolution
- MPLS: Multi-Protocol Label Switching
- OAM: Operation, Administration, Maintenance
- OEM: Original Equipment Manufacturer
- PC: Personal Computer
- PWE3: Pseudo-Wire Emulation Edge-to-Edge
- SAE: System Architecture Evolution
- SS#7: Signaling System number 7
- UMTS: Universal Mobile Telecommunications System

## Claims

1. A method for processing data in an IP-based network,
- wherein based on a request from a terminal an emulated wire is set up between two IP network access devices.

2. The method according to claim 1, wherein the IP-based network comprises at least two IP-based network domains, wherein the emulated wire is set up across the at least two IP-based network domains by setting up emulated wire segments between edges of the IP-based network domains.

3. The method according to any of the preceding claims, wherein the terminal is a terminal attached to the IP network access device via a fixed connection and/or via a wireless connection.

4. The method according to any of the preceding claims, wherein the emulated wire to be set up is triggered by an application running on the terminal and/or by user request.

5. The method according to any of the preceding claims, wherein the emulated wire is used for conveying data between the terminal and a destination terminal, wherein the terminal and the destination terminal are each attached to one of the IP network access devices.

6. The method according to any of the preceding claims, wherein the emulated wire is set up across the IP-based network.

7. The method according to any of the preceding claims, wherein a path along the emulated wire is checked.

8. The method according to any of the preceding claims, wherein the terminal is attached to the IP network access device.

9. The method according to any of the preceding claims, wherein the emulated wire comprises an edge-to-edge pseudo wire.

10. The method according to any of the preceding claims, wherein the emulated wire utilizes a secured IP-based transport technique, in particular an Internet protocol security.

11. The method according to any of the preceding claims, wherein the emulated wire utilizes a non-IP transport solution, in particular based on pseudo-wire services.

12. A device comprising or being associated with a processing unit that is arranged such that the method according to any of the preceding claims is executable thereon.

13. The device according to claim 12, wherein said device is a communication device, in particular a or being associated with a terminal.

14. The device according to claim 12, wherein said device is a communication device, in particular a or being associated with an IP network access device.

15. Communication system comprising the device according to any of claims 12 to 14.
